# EUROPÄISCHE PATENTSCHRIFT

(11) **EP 1 611 711 B1**
(45) Veröffentlichungstag und Bekanntmachung des Hinweises auf die Patenterteilung: **28.11.2007**
(21) Anmeldenummer: 03720271.0
(22) Anmeldetag: 04.04.2003
(51) Int. Cl.: H04L 12/14

(54) **Verfahren zur Online-Vergebührung mit Grenzwertüberwachung von Datenübertragungen**
Method for online charge assessment with monitoring limit of data transmissions
Procède de taxation en ligne avec surveillance de valeurs limites de transmissions de données

(43) Veröffentlichungstag der Anmeldung: 04.01.2006
(73) Patentinhaber: NOKIA SIEMENS NETWORKS GMBH & CO. KG, 81541 München (DE)
(72) Erfinder: FÖLL, Uwe, 14612 Falkensee (DE); HAHN, Wolfgang, 16562 Bergfelde (DE)
(86) Internationale Anmeldenummer: PCT/DE2003/001225
(87) Internationale Veröffentlichungsnummer: WO 2004/093382

(56) Entgegenhaltungen:
- EP-A- 0 837 578
- US-A1- 2002 127 995
- 3GPP: "Digital cellular telecommunications system; Universal Mobile Telecommunications System (UMTS);Telecommunication management; Charging management; Charging management; Charging principles" ETSI TS 132 200 V5.3.0, [Online] März 2003 (2003-03), Seiten 1-84, XP002264014 Gefunden im Internet: <URL:http://webapp.etsi.org/action%5CPU/20 030415/ts_132200v050300p.pdf> [gefunden am 2003-12-05]

## Beschreibung

Die vorliegende Erfindung betrifft ein Verfahren zur Kontrolle und Steuerung eines zur Verfügung stehenden zentralen IP-Budgets, wie beispielsweise Zeit, Übertragungsvolumen, Paketanzahl, eines Teilnehmers in einem paket-basierten Kommunikationsnetz bei einer Online-Vergebührung mit Grenzwertüberwachung von Datenübertragungen. In drahtlosen und drahtgebundenen Kommunikationsnetzen werden häufig Kommunikationsverfahren verwendet, welche auf der Übertragung von Datenpaketen (z.B. IP-Paheten, IP=Internet Protokoll) beruhen. Man spricht dabei dann von paket-basierten Kommunikationsnetzen. Bei einem paket-basierten Kommunikationsnetz kann es sich beispielsweise um ein Mobilfunknetz der dritten Generation handeln, welches nach GPRS-Vorgaben arbeitet (GPRS=General Packet Radio System). In paketbasierten Mobilfunknetzen basiert eine Gebührenerfassung unter anderem auf einer Erfassung der übertragenen IP-Pakete. Die Gebühren berechnen sich dabei aus dem Gesamtvolumen der von und zu einem Nutzer übertragenen IP-Pakete, deren Anzahl oder der Anzahl der Datenbytes. Ebenso können die Gebühren aufgrund der Übertragungszeit bestimmt werden. Dieser Ressourcenverbrauch wird im Rahmen der vorliegenden Erfindung als IP-Budget bezeichnet. Existierende Online Gebühren-Dienste für GPRS basieren auf einer Überwachung des IP-Budgets für einen PDP-Kontext. Ein PDP-Kontext ist ein Beispiel einer sogenannten Layer2-Verbindung eines Teilnehmers zu dem Kommunikationsnetz. Das durch den Gebührenrechner für einen Datenstrom zur Verfügung gestellte Budget wird durch aktuelle Parameter, wie beispielsweise ein Guthaben des Teilnehmers, eine zur Verfügung gestellte Bandbreite oder durch eine Qualitätsanforderung (QoS) eines Datenstroms bestimmt. Dabei können sich mehrere Datenströme innerhalb eines Layer 2/PDP-Kontextes befinden. Ein konkret zur Verfügung gestelltes Budget ist immer an die Parameter eines Datenstromes gebunden. Stellt ein Budget beispielsweise 300kB zur Verfügung, so kann dieses Budget nur für einen Datenstrom mit den vorgegebenen Bandbreiten oder Qualitätsanforderungen verwendet werden. Wird das Budget beispielsweise konkret für einen sogenannten "Best Effort" Datenstrom zur Verfügung gestellt, so kann dieses Budget nicht in der gleichen Höhe für einen anderen, beispielsweise einen sogenannten "realtime" Datenstrom genutzt werden. Es stellt sich somit die Notwendigkeit einer differenzierten Erfassung von Übertragungsdaten, wobei die einzelnen Datenströme innerhalb eines Layer 2/PDP-Kontextes unterschieden werden. Einzelne Datenströme realisieren dabei Transaktionen einer Anwendung zwischen zwei oder mehreren IP Endpunkten. In GPRS wird dazu eine Steuerfunktion, eine sogenannte IP-Flow Funktion definiert. Bei diesem Konzept stellt sich nun das Problem der Zuordnung von Budgets auf die einzelnen Datenströme. Ferner stellt sich die Frage nach einer Verfahrensweise im Falle des Erreichens der Budgetgrenze, das heißt, wenn der Gebührenrechner bzw. der Online Charging-Server auf Nachfrage kein weiteres Budget mehr zur Verfügung stellen kann. Bisher wurde der gesamte PDP-Kontext durch einen Steuernetzknoten des GPRS-Netzes, einen sogenannten SGSN überwacht und im Falle des Erreichens der Budgetgrenze wurde die Verbindung getrennt.

Bei Realisierung der sogenannten IP Flow Funktion würden die Budgets direkt den einzelnen Datenströmen zugeordnet werden und im Falle des Erreichens der Budgetgrenze würde der entsprechende Datenstrom unterbrochen, wobei die verbleibenden Datenströme weiter bestehen bleiben würden.

Dieses Konzept ist allerdings sehr starr in Bezug auf die Budgetverteilung und erlaubt keine Flexibilität bei Erreichen der Budgetgrenze in Bezug auf einen konkreten Datenstrom.

Dokument XP002264014 offenbart ein Verfahren zur Online-Vergebührung von Datenübertragungen in UMTS, wobei die Höhe der Belastung datenstromspezifisch bestimmt wird.

Eine Aufgabe der vorliegenden Erfindung war es nunmehr, ein Verfahren bereitzustellen, mit dessen Hilfe es möglich wird, flexibel und gleichzeitig kontrolliert ein für einen Teilnehmer zur Verfügung stehendes IP-Budget auf die einzelnen Datenströme zu verteilen.

Gelöst wird diese Aufgabe durch ein erfindungsgemäßes Verfahren gemäß Anspruch 1. Weitere vorteilhafte Ausführungsformen sind in den Unteransprüchen aufgeführt.

In einer bevorzugten Ausführungsform des erfindungsgemäßen Verfahrens wird als paket-basiertes Kommunikationsnetz ein GPRS-Netz verwendet. Die Steuerfunktion ist vorzugsweise dabei in einem GGSN des GPRS-Netzes lokalisiert. Im Beispiel von GPRS befinden sich, wie eingangs bereits erwähnt, mehrere Datenströme in einem PDP-Kontext. Wie bereits erläutert stellt ein PDP-Kontext ein Beispiel einer sogenannten Layer2-Verbindung eines Teilnehmers zu dem Kommunikationsnetz dar. Analoge Layer2-Verbindungen gibt es auch in einem drahtlosen lokalen Kommunikationsnetz, einem sogenannten WLAN (Wireless Local Area Network). Das erfindungsgemäße Verfahren ist für beliebige IP-Flows/Datenströme anwendbar.

In dem erfindungsgemäßen Verfahren wird seitens des Gebührenrechners zur Bestimmung der Höhe der Belastung des zentralen IP-Budgets durch die einzelnen Datenströme jeweils ein datenstromspezifischer Gewichtungsfaktor vorgegeben und nach Übertragung eines Datenvolumens in dem Datenstrom das übertragene Datenvolumen durch die Steuerfunktion mit dem Gewichtungsfaktor gewichtet, daraus ein entsprechender Anteil des IP-Budgets ermittelt und der sich daraus ergebende Anteil des IP-Budgets unmittelbar von dem IP-Budget abgezogen. Das bedeutet, dass hierbei im Vorfeld den einzelnen Datenströmen keine festen datenstromspezifischen IP-Budgets zugeordnet werden, sondern eine Zuteilung durch den Gebührenrechner findet für die gesamten Datenströme eines Teilnehmers oder einer IP-Adresse des Teilnehmers oder eines Kontextes des Teilnehmers statt. Das bedeutet, dass die Steuerfunktion zunächst das gesamte IP-Budget beispielsweise eines Teilnehmers oder einer IP-Adresse oder eines Kontextes zur Verteilung zur Verfügung hat. Dadurch steht allen Datenströmen eines Teilnehmers oder einer IP-Adresse des Teilnehmers oder eines Kontextes des Teilnehmers das gesamte IP-Budget gleichermaßen zur Verfügung. Je nach übertragenem Datenvolumen in den einzelnen Datenströmen wird dann der entsprechende mittels des datenstromspezifischen Gewichtungsfaktors bestimmte Anteil des IP-Budgets vom IP-Budget unmittelbar abgezogen. Bei dieser Ausführungsform existiert ein Zähler, auf den das gesamte gewichtete Übertragungsvolumen addiert wird, und welcher regelmäßig mit dem vorgebenden IP-Budget verglichen wird.

In einer weiteren besonders bevorzugten Ausführungsform des erfindungsgemäßen Verfahrens wird das zentrale IP-Budget nur für Ressourcennutzungen von solchen Datenströmen belastet, die alle zu einem Kontext gehören, der einer IP-Adresse desselben Teilnehmers zuordenbar ist.

Besonders bevorzugt wird das zentrale IP-Budget nur für Ressourcennutzungen von solchen Datenströmen belastet, die alle zu demselben Kontext gehören. Im Falle von GPRS handelt es sich dabei dann um eine Layer 2-Verbindung oder einen PDP-Kontext.

Durch das erfindungsgemäße Verfahren kann sehr einfach und flexibel der häufig eintretende Fall behandelt werden, dass verschiedene Datenströme unterschiedlich vergebührt werden sollen. Demnach müssen bei einer Belastung des zentralen IP-Budgets die datenstromspezifischen Parameter der einzelnen Datenströme berücksichtigt werden. Zu diesem Zweck findet erfindungsgemäß eine Gewichtung der durch den jeweiligen Datenstrom erfolgten Ressourcennutzung statt bevor das zentrale IP-Budget damit belastet wird. Hierzu gibt der Gebührenrechner erfindungsgemäß im Rahmen seiner Vergebührungsvorgaben der Steuerfunktion zur Vergebührung eines Datenstroms einen datenstromspezifischen Umrechnungsfaktor bzw. Gewichtungsfaktor zur Bestimmung des datenstromspezifisch zu bestimmenden Anteils des IP-Budgets vor. Mittels dieses Gewichtungsfaktors kann die bei einer Übertragung angefallene Ressourcennutzung entsprechend den Vorgaben für den Datenstrom gewichtet werden. Beispielsweise kann es einen Datenstrom "Flow 1" mit einem Gewichtungsfaktor 1 = 10Bytes pro Unit und einen weiteren Datenstrom "Flow 2" mit einem Gewichtungsfaktor 2 = 20kByte pro Unit geben. Für jede übertragenen 10OkByte des Datenstroms "Flow 1" wird das zentrale IP-Budget mit zehn Einheiten (Units) belastet, für jede 100kByte des Datenstrom "Flow 2" dagegen mit fünf Einheiten (Units).

Vorzugsweise kann der Gebührenrechner für jeden Datenstrom einen Gewichtungsfaktor vorgeben und der Steuerfunktion mitteilen. Alternativ dazu kann der Gebührenrechner auch einen Index auf eine in der Steuerfunktion hinterlegten Verteilungstabelle übermitteln, mit dessen Hilfe der Steuerfunktion die maßgebende Position in der Tabelle angegeben wird, wo der betreffende Gewichtungsfaktor hinterlegt ist. Neben den Gewichtungsfaktoren kann die Verteilungstabelle auch weitere Angaben in Bezug auf den entsprechenden Datenstrom enthalten, wie beispielsweise vorbestimmte Prioritäten oder eine Information darüber, ob der Datenstrom überhaupt vergebührt wird oder gebührenfrei ist. Das bedeutet, dass die Steuerfunktion zur Ermittlung des Gewichtungsfaktors auf eine Tabelle zugreift, die für alle einem Teilnehmer zuordenbaren Datenströme datenstromspezifische Vergebührungsangaben umfasst. Dabei kann der Index generell eine für den Teilnehmer spezifische Tabelle auswählen, in dem der Gewichtungsfaktor auf Grund der Eigenschaften des Datenstroms adressiert werden kann, oder der Index kann gleich auf einen bestimmten Gewichtungsfaktor zeigen. Diese Tabelle wird in einer bevorzugten Ausführungsform des erfindungsgemäßen Verfahrens in der Steuerfunktion statisch verwaltet. Ferner besteht aber auch die Möglichkeit, dass diese Tabelle durch den Gebührenrechner oder eine andere Funktion zur Steuerfunktion übertragen wird. Bei Hinzukommen neuer, bisher nicht identifizierbarer Datenströme wird dann die Verteilungstabelle um einen neuen Eintrag erweitert. Alternativ kann auch ein zusätzlicher Index auf eine existierende Tabelle durch den Gebührenrechner vorgegeben werden.

In einer weiteren bevorzugten Ausführungsform des erfindungsgemäßen Verfahrens werden für die einzelnen Datenströme zusätzlich Prioritäten definiert, welche beim Erreichen eines Schwellwertes für das Restbudget berücksichtigt werden. So zum Beispiel kann ein Datenstrom, der für Signalisierungsinformationen ausgezeichnet ist, mit höchster Lebensdauer, das heißt hoch priorisiert behandelt werden; die übrigen Datenströme würden beendet werden. So kann gewährleistet werden, dass mit einem verbleibenden Restbudget eine "Minimalkommunikation", beispielsweise zum Aufladen des Kontos seitens des Teilnehmers erfolgen kann.

In einer besonders bevorzugten Ausführungsform des erfindungsgemäßen Verfahrens wird beim Hinzukommen eines neuen Datenstroms das existierende IP-Budget weiter verwendet und es wird beim Gebührenrechner angefragt, wie die Ressourcenutzung durch diesen Datenstrom im Bezug auf das IP-Budget zu gewichten ist.

In einer besonders bevorzugten Ausführungsform des erfindungsgemäßen Verfahrens wird beim Hinzukommen eines neuen Datenstroms das existierende IP-Budget weiter verwendet, es wird aber der Steuerfunktion durch den Gebührenrechner ein zusätzliches IP-Budget zugeordnet, welches diese zum existierenden addiert.

In einer weiteren bevorzugten Ausführungsform des erfindungsgemäßen Verfahrens sendet die Steuerfunktion beim Beenden eines der Datenströme das IP-Budget an den Gebührenrechner zurück. Der Gebührenrechner teilt dann unter Berücksichtigung der neuen Anzahl und Kombination der Datenströme der Steuerfunktion ein neues IP-Budget zu.

In einer weiteren bevorzugten Ausführungsform des erfindungsgemäßen Verfahrens informiert die Steuerfunktion den Gebührenrechner über das Hinzukommen oder Wegfallen eines der Datenströme. Der Gebührenrechner teilt der Steuerfunktion dann mit, wie das existierende IP-Budget weiter zu verwenden ist.

In einer weiteren besonders bevorzugten Ausführungsform des erfindungsgemäßen Verfahrens fordert der Gebührenrechner beim Hinzukommen oder Wegnehmen eines Datenstroms das existierende IP-Budget zurück und sendet der Steuerfunktion unter Berücksichtigung der Eigenschaften des neuen Datenstroms sowie der Kombination der verschiedenen Datenströme ein neues IP-Budget. Dieses ist insbesondere sinnvoll um das Gesamtbudget des Teilnehmers den neuen Gegebenheiten anzupassen.

In dem erfindungsgemäßen Verfahren teilt der Gebührenrechner der Steuerfunktion mittels einer Tabelle oder einem Zeiger auf eine Position in einer Tabelle mit, mit welchem Gewichtungsfaktor das IP-Budget eines Datenstroms im Falle einer Parameteränderung (z.B. Qos- Änderung) dieses Datenstroms neu zu gewichten ist.

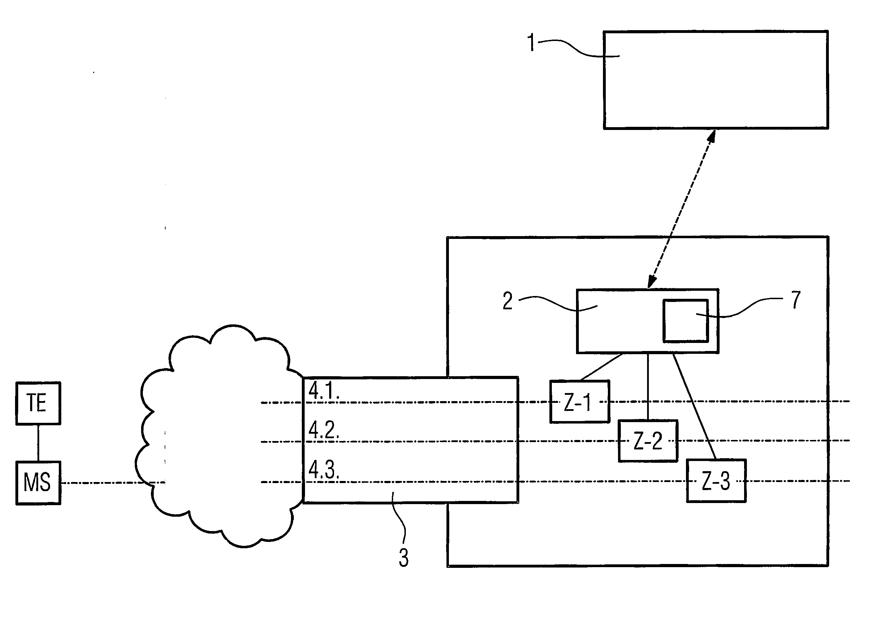

Weitere Vorteile werden anhand der folgenden Figur aufgezeigt. Es zeigt
Fig. 1 Schematische Darstellung einer Ausführungsform des erfindungsgemäßen Verfahrens

In Figur 1 ist eine Ausführungsform des erfindungsgemäßen Verfahrens dargestellt. Es ist ein Gebührenrechner 1, eine Steuerfunktion 2 und eine Layer2-Verbindung 3 dargestellt. Für einen Teilnehmer TE wird mittels eines mobilen Endgerätes MS über ein Zugangsnetz die Layer2-Verbindung 3 in dem paketbasierten Kommunikationsnetz aufgebaut. Die Layer2-Verbindung 3 enthält mehrere Datenströme 4.1.-4.3. Der Gebührenrechner 1 gibt der Steuerfunktion 2 zur Vergebührung der jeweiligen Datenströme datenstromspezifische Gewichtungsfaktoren. Z-1 - Z-3 vor. Die Steuerfunktion 2 verwaltet ein IP-Budget 7. Nach Übertragung eines Datenvolumens in einem Datenstrom, beispielsweise in Datenstrom 4.1. wird das übertragenen Datenvolumen mittels des Gewichtungsfaktors Z-1. durch die Steuerfunktion 2 gewichtet. Daraus wird durch die Steuerfunktion 2 ein entsprechender Anteil des IP-Budgets 7 ermittelt. Der daraus sich ergebende Anteil des IP-Budgets 7 wird dann unmittelbar von dem IP-Budget 7 abgezogen. Das bedeutet, dass hierbei im Vorfeld den einzelnen Datenströmen 4.1.-4.3. keine festen datenstromspezifischen Anteile des IP-Budgets 7 zugeordnet werden. Das bedeutet, dass der Steuerfunktion 2 zunächst das IP-Budget 7 in seiner Gesamtheit zur Verteilung zur Verfügung steht. Das IP-Budget 7 kann dabei das Budget sein, das durch den Gebührenrechner einem Teilnehmer, einer IP-Adresse oder einem Kontext zugeordnet worden ist. Dadurch stehen allen entsprechend zuordenbaren Datenströmen 4.1.-4.3. das gesamte IP-Budget 7 gleichermaßen zur Verfügung. Je nach übertragenem Datenvolumen in den einzelnen Datenströmen 4.1.-4.3. wird dann der entsprechende mittels des datenstromspezifischen Gewichtungsfaktors Z-1 - Z-3 bestimmte Anteil vom IP-Budget 7 unmittelbar abgezogen. Zur Ermittlung der jeweiligen Gewichtungsfaktoren Z-1 - Z-3 greift die Steuerfunktion 2 auf eine Tabelle zu, die für alle einem Teilnehmer zuordenbare Datenströme datenstromspezifische Vergebührungsangaben um-fasst. Es gibt nun mehrere Möglichkeiten, wie der Steuerfunktion 2 der entsprechende Gewichtungsfaktor angegeben wird. Zum Einen kann der Gebührenrechner 1 einen Index auf die in der Steuerfunktion 2 hinterlegte Tabelle übermitteln. Dabei kann der Index generell eine für den Teilnehmer spezifische Tabelle auswählen, in der der Gewichtungsfaktor auf Grund der Eigenschaften des entsprechenden Datenstroms adressiert werden kann oder der Index kann unmittelbar auf einen bestimmten Gewichtungsfaktor zeigen. Diese Tabelle wird beispielsweise in der Steuerfunktion 2 statisch verwaltet. Ferner besteht aber auch die Möglichkeit, dass die Tabelle durch den Gebührenrechner 1 oder eine andere Funktion zur Steuerfunktion 2 übertragen wird.

## Patentansprüche

1. Verfahren zur Kontrolle und Steuerung eines zur Verfügung stehenden IP-Budgets eines Teilnehmers (TE) in einem paketbasierten Kommunikationsnetz bei einer Online-Vergebührung von Datenübertragungen, bei dem eine Steuerfunktion (2) in einem Netzknoten des Kommunikationsnetzes vorgesehen wird, die ein zentrales, von einem Gebührenrechner (1) zugewiesenes IP-Budget (7) verwaltet und die nach Vergebührungsvorgaben von dem Gebührenrechner (1) bei einer Ressourcennutzung einer Datenübertragung mehrerer Datenströme (4.1-4.3) in einem dem Teilnehmer zuordenbaren Kontext ein zentrales IP-Budget (7) belastet, wobei die Höhe der Belastung datenstromspezifisch bestimmt wird,
**dadurch gekennzeichnet, dass** seitens des Gebührenrechners zur Bestimmung der Höhe der Belastung durch einen Datenstrom ein datenstromspezifischer Umrechnungsfaktor bzw. Gewichtungsfaktor (Z-1-Z-3) vorgegeben wird, nach Übertragung eines Datenvolumens in dem Datenstrom das übertragene Datenvolumen durch die Steuerfunktion mit dem Gewichtungsfaktor gewichtet, daraus ein entsprechender Anteil des IP-Budgets ermittelt und der sich daraus ergebende Anteil des IP-Budgets unmittelbar von dem IP-Budget abgezogen wird,
wobei die Steuerfunktion zur Ermittlung des Gewichtungsfaktors auf eine Tabelle zugreift, die für einem Teilnehmer zuordenbare Datenströme datenstromspezifische Vergebührungsangaben umfasst,
wobei bei Hinzukommen eines neuen Datenstroms jeweils ein neuer Gewichtungsfaktor oder eine neue Tabelle oder ein Index oder ein Identifier auf ein Tabellenelement durch den Gebührenrechner an die Steuerfunktion übergeben wird,
wobei der Gebührenrechner der Steuerfunktion mittels einer Tabelle oder einem Zeiger auf eine Position in einer Tabelle mitteilt, mit welchem Gewichtungsfaktor ein übertragenes Datenvolumen in einem Datenstrom im Falle einer Parameteränderung neu zu gewichten ist.

2. Verfahren nach einem der vorhergehenden Ansprüche,
**dadurch gekennzeichnet,**
**dass** als paket-basiertes Kommunikationsnetz ein GPRS-Netz verwendet wird.

3. Verfahren nach Anspruch 2,
**dadurch gekennzeichnet,**
**dass** die Steuerfunktion in einem GGSN lokalisiert wird.

4. Verfahren nach einem der vorhergehenden Ansprüche,
**dadurch gekennzeichnet,**
**dass** das zentrale IP-Budget nur für Ressourcennutzungen von solchen Datenströmen belastet wird, die alle zu einem Kontext gehören, der einer IP-Adresse desselben Teilnehmers zuordenbar ist.

5. Verfahren nach einem der vorhergehenden Ansprüche,
**dadurch gekennzeichnet,**
**dass** das zentrale IP-Budget nur für Ressourcennutzungen von solchen Datenströmen belastet wird, die alle zu demselben Kontext gehören.

6. Verfahren nach einem der vorhergehenden Ansprüche,
**dadurch gekennzeichnet,**
**dass** bei Hinzukommen eines neuen Datenstroms und bei einer Ressourcennutzung seitens des neuen Datenstroms das existierende IP-Buget belastet wird.

7. Verfahren nach Anspruch 6,
**dadurch gekennzeichnet,**
**dass** der Gebührenrechner der Steuerfunktion ein zusätzliches IP-Budget zur Verwaltung zuweist.

8. Verfahren nach einem der vorhergehenden Ansprüche,
**dadurch gekennzeichnet,**
**dass** die Steuerfunktion bei Hinzukommen und/oder Wegfallen mindestens eines Datenstromes das verbleibende IP-Budget an den Gebührenrechner übergibt und der Gebührenrechner der Steuerfunktion ein neues IP-Budget zuweist.

9. Verfahren nach einem der vorhergehenden Ansprüche
**dadurch gekennzeichnet,**
**dass** die Steuerfunktion den Gebührenrechner über ein Hinzukommen und/oder Wegfallen eines Datenstroms informiert und der Gebührenrechner der Steuerfunktion Vorgaben über eine weitere Verwendung des IP-Budgets gibt.

## Claims

1. Method for monitoring and controlling an available IP budget of a subscriber (TE) in a packet-based communication network during online charging for data transmissions, wherein a control function (2) is provided in a network node of the communication network, which administers a central IP budget (7) assigned by a charge computer (1) and which charges a central IP budget (7) according to charging specifications of the charge computer (1) for resource usage of a data transmission of a number of data streams (4.1. - 4.3.) in a context which can be assigned to the subscriber, with the level of the charge on a data stream being determined on a data stream-specific basis,
**characterised in that**
on the charge computer side, to determine the level of the charge, a data stream-specific conversion factor or weighting factor (Z.1 - Z.3) is specified, after transmission of a data volume in the data stream the transmitted data volume is weighted by the control function with the weighting factor, a corresponding proportion of the IP budget is determined from this and the resulting proportion of the IP budget is deducted directly from the IP budget.
With, to determine the weighting factor, the control function accessing a table which comprises data stream-specific charge data for data streams which can be assigned to a subscriber,
with a new weighting factor or a new table or an index or identifier for a table element being transferred respectively to the control function by the charge computer when a new data stream is added,
with the charge computer notifying the control function, by means of a table or a pointer to a position in a table, of the weighting factor to be used to newly weight a transmitted data volume in a data stream in the event of a parameter change.

2. Method according to one of the preceding claims,
**characterised in that**
a GPRS network is used as a packet-based communication network.

3. Method according to claim 2,
**characterised in that**
the control function is located in a GGSN.

4. Method according to one of the preceding claims,
**characterised in that**
the central IP budget is charged only for resource usage by those data streams which all belong to one context, which can be assigned to an IP address of the same subscriber.

5. Method according to one of the preceding claims,
**characterised in that**
the central IP budget is charged only for resource usage by those data streams which all belong to the same context.

6. Method according to one of the preceding claims,
**characterised in that**
on the addition of a new data stream and resource usage on the part of the new data stream the existing IP budget is charged.

7. Method according to claim 6,
**characterised in that**
the charge computer allocates an additional IP budget to the control function for administration.

8. Method according to one of the preceding claims,
**characterised in that**
the control function, on the addition and/or removal of at least one data stream, transfers the remaining IP budget to the charge computer and the charge computer allocates a new IP budget to the control function.

9. Method according to one of the preceding claims,
**characterised in that**
the control function informs the charge computer about the addition and/or removal of a data stream and the charge computer gives the control function specifications about a further use of the IP budget.

## Revendications

1. Procédé pour contrôler et commander un budget IP disponible d'un abonné (TE) dans un réseau de communications basé sur des paquets lors d'une taxation en ligne de transmissions de données, dans lequel une fonction de commande (2) est prévue dans un noeud de réseau du réseau de communications, laquelle fonction de commande gère un budget IP central (7) alloué par un ordinateur de taxation (1) et charge un budget IP central (7) en fonction de spécifications de taxation de l'ordinateur de taxation (1) lors d'une utilisation de ressources d'une transmission de données de plusieurs flux de données (4.1. - 4.3.) dans un contexte pouvant être associé à l'abonné, la hauteur de la charge étant déterminée de manière spécifique aux flux de données,
**caractérisé**
**en ce qu'**un facteur de conversion resp. facteur de pondération (Z-1 - Z-3) spécifique d'un flux de données est spécifié, du côté de l'ordinateur de taxation, pour déterminer la hauteur de la charge engendrée par un flux de données, le volume de données transmis est pondéré du facteur de pondération par la fonction de commande après la transmission d'un volume de données dans le flux de données, une fraction correspondante du budget IP résultant de la pondération est déterminée et la fraction du budget IP en résultant est directement soustraite du budget IP,
la fonction de commande accédant, pour déterminer le facteur de pondération, à un tableau comprenant des indications de taxation spécifiques de flux de données pour des flux de données pouvant être associés à un abonné,
un nouveau facteur de pondération ou un nouveau tableau ou un index ou un identifiant indiquant un élément de tableau étant transmis à la fonction de commande par l'ordinateur de taxation à chaque fois qu'un nouveau flux de données est ajouté,
l'ordinateur de taxation communiquant à la fonction de commande, au moyen d'un tableau ou d'un indicateur d'une position dans un tableau, quel facteur de pondération il faut utiliser pour procéder à une nouvelle pondération d'un volume de données transmis dans un flux de données en cas de modification de paramètres.

2. Procédé selon l'une des revendications précédentes, **caractérisé en ce qu'**un réseau GPRS est utilisé en tant que réseau de communications basé sur des paquets.

3. Procédé selon la revendication 2, **caractérisé en ce que** la fonction de commande est localisée dans un GGSN.

4. Procédé selon l'une des revendications précédentes, **caractérisé en ce que** le budget IP central n'est chargé que pour des utilisations de ressources par des flux de données appartenant tous à un contexte pouvant être associé à une adresse IP du même abonné.

5. Procédé selon l'une des revendications précédentes, **caractérisé en ce que** le budget IP central n'est chargé que pour des utilisations de ressources par des flux de données appartenant tous au même contexte.

6. Procédé selon l'une des revendications précédentes, **caractérisé en ce que** le budget IP existant est chargé lors de l'ajout d'un nouveau flux de données et lors d'une utilisation de ressources de la part du nouveau flux de données.

7. Procédé selon la revendication 6, **caractérisé en ce que** l'ordinateur de taxation affecte à la fonction de commande un budget IP supplémentaire à gérer.

8. Procédé selon l'une des revendications précédentes, **caractérisé en ce que** la fonction de commande transmet le budget IP restant à l'ordinateur de taxation lors de l'ajout et/ou de la suppression d'au moins un flux de données et l'ordinateur de taxation affecte un nouveau budget IP à la fonction de commande.

9. Procédé selon l'une des revendications précédentes, **caractérisé en ce que** la fonction de commande informe l'ordinateur de taxation d'un ajout et/ou d'une suppression d'un flux de données et l'ordinateur de taxation fournit à la fonction de commande des spécifications concernant une nouvelle utilisation du budget IP.
